(19) Europäisches Patentamt
European Patent Office
Office européen des brevets

(11) EP 2 484 708 B1

(12) **EUROPEAN PATENT SPECIFICATION**

(45) Date of publication and mention of the grant of the patent:
**27.09.2017 Bulletin 2017/39**

(21) Application number: **12166282.9**

(22) Date of filing: **22.05.2009**

(51) Int Cl.:
***C08G 18/38*** *(2006.01)* ***C08L 63/00*** *(2006.01)*
***C08L 63/02*** *(2006.01)* ***C08L 75/00*** *(2006.01)*
***C09D 163/00*** *(2006.01)* ***C09D 163/02*** *(2006.01)*
***C09D 175/02*** *(2006.01)* ***C09D 175/04*** *(2006.01)*

(54) **Novel fast curing ultra high solids low voc epoxy primer compositions for aggressive corrosive environments**

Neue schnellaushärtende Epoxy-Primer-Zusammensetzungen mit hohem Feststoff-Gehalt und niedrigem VOC-Gehalt für korrosive Umgebungen.

Nouvelles compositions primaires à base époxy à faible taux VOC, tres haut pourcentage de solide et reticulant rapidement, pour environnements aggressifs

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.05.2008 EP 08156796**

(43) Date of publication of application:
**08.08.2012 Bulletin 2012/32**

(60) Divisional application:
**13172326.4 / 2 653 485**

(62) Document number(s) of the earlier application(s) in accordance with Art. 76 EPC:
**09749928.9 / 2 283 056**

(73) Proprietor: **Hempel A/S**
**2800 Kongens Lyngby (DK)**

(72) Inventors:
- **Hansen, Karl-Johan**
  **4622 Havdrup (DK)**
- **Nysteen, Søren Mørch**
  **2830 Virum (DK)**

(74) Representative: **Inspicos P/S**
**Kogle Allé 2**
**2970 Hørsholm (DK)**

(56) References cited:
**EP-A- 0 257 513**
**WO-A-2006/119770**
**US-A- 5 126 170**
**US-A- 5 987 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to novel zinc epoxy primer compositions and the use thereof for fast curing coating systems consisting of an epoxy primer and a polyurea top-coat. The coating systems have improved drying time and low VOC and still maintain excellent rust creep resistance. The present invention provides improved drying time and low VOC by using an ultra high solid polyurea top-coat on top of the zinc epoxy primer. The coating systems of the present invention are non-thermosetting compositions.

BACKGROUND OF THE INVENTION

Epoxy coatings are used mainly as part of an anti-corrosive coating system on steel substrates due to outstanding corrosion and chemical resistance.

Epoxy coating compositions are typically one or two-component products. If the product is two-component, component one normally consists of an epoxy base and component two consists of a curing agent. If the epoxy is a zinc epoxy, the zinc will normally be present in the base composition.

Zinc epoxies are superior to standard epoxies concerning anticorrosive properties due to their function as a sacrificial anode applied directly on top of the clean steel surface. When the coating layer is damaged the zinc will protect the damage by a galvanic process. The function is similar to that of galvanized steel.

Epoxies can be used as a primer, *i.e.* first coating layer in a multiple coat system with subsequent layers of suitable generic types of coatings, or as an intermediate coat with subsequent suitable coats *e.g.* polyurethane or polyurea, or as a top-coat. However, epoxy paints can also be used as one-coat systems.

Polyurea is the general term used for coatings based on amines reacted with iso-cyanates or poly-isocyanates. The polymerization reaction between amine and isocyanates is in general extremely fast. Both aromatic and aliphatic isocyanates are used in polyurea coatings. However, it is only aliphatic iso-cyanates that give acceptable outdoor durability.

Poly aspartic acid esters are a special type of polyurea binder where an amine is pre-reacted with di-ethyl maleate. The amine functionality is by this pre-reaction becoming partly sterically hindered. The reaction speed is dependent on the amine used.

Poly aspartic esters are available in different reaction speed from fast to slow reaction polymers.

Polyurea top-coats based on poly aspartic acid esters are well known to give excellent outdoor durability with excellent gloss and color stability. Poly aspartic esters can be designed to give fast cure at ambient condition and with the partly sterical hindrance of the amine the reaction speed gives a reasonable pot-life to be handled in either two-component application equipment or standard airless spray equipment.

Epoxy and polyurea paint systems are normally used where superior corrosion protection and fast process time is needed. Such paint systems are designed to be used in aggressive corrosive environments like off-shore platforms, windmill towers, steel chimneys, power stations, steel bridges, cranes etc. in costal, off-shore, or industrial environments, but also tidal zone areas where fast salt water resistance is required.

Corrosive environments are rated according to ISO 12944 on a scale from C2 to C5 with C2 being mildly corrosive and C5 being an aggressively corrosive environment.

In recent years faster curing products have appeared. Fast curing lower the overall processing time and has become a very important parameter for paint applicators and contractors. However it has so far only been possible to decrease the curing time to a certain level if the workability and corrosion properties should be preserved.

The curing process starts on the surface of the coating. When curing is too fast the soft uncured part of the coating will not have sufficient strength to "carry" the stress built up during curing and defects will develop on the surface leading to subsequent loss of adhesion, cohesion and corrosion problems.

Another important parameter is the content of Volatile Organic Compound (VOC) of a coating system. VOC emissions influence the environment in a negative way. In recent years there has been an increasing focus on environmental aspects and awareness and discussions of green house effect. It is therefore an important parameter to keep the VOC of a coating system to an absolute minimum.

WO 2006/119770 A discloses epoxy paint coating compositions which are curable at ambient temperature and which have a volume solids % of at the most about 70 %. The use of zinc fibres is suggested, but the amount of zinc is not specified.

US 5,987,727 A discloses automobile parts lacquered with a thermosetting coating system. No zinc is used, and the compositions have a volume solids % of at the most 70 %.

EP 257513 A discloses thermosetting high solids epoxy primer compositions having a volume solids % of about 90 %. No zinc is used in the compositions. EP 1788048 A discloses high-solids anticorrosive epoxy primer compositions

wherein the solids content is in the range of 72 to 100 % by volume. No zinc is used in the compositions.

WO 2007/054304 discloses an epoxy based primer composition comprising about 24 % of zinc oxide.

So far, the coating solution for the mentioned application areas has been medium solids coatings used in either two or three coat systems with relatively long drying /curing schedules resulting in long process time and with relatively high VOC emissions.

There is thus a need for alternative epoxy primer coating compositions for coating systems for aggressive corrosive environments, enabling faster processing and lower VOC.

SUMMARY OF THE INVENTION

It has now surprisingly been discovered that it is possible to provide a non-thermosetting coating system consisting of a zinc epoxy primer composition and a polyurea top-coat composition with significantly reduced processing time and low VOC, which still provides the superior protection needed for aggressive corrosion classes.

The present invention provides a zinc epoxy primer composition, cf. claim 1.

The present invention also provides the use of a zinc epoxy primer compositions for a high solids coating system consisting of a zinc epoxy primer and a top-coat, enabling faster processing time and low VOC.

More particular, the present invention relates to the use of a zinc epoxy primer composition in a coating system, cf. claim 9 and claim 10. The present invention also provides the use of a zinc epoxy primer composition in a method for the establishment of a coated structure, cf. claim 13.

DETAILED DESCRIPTION OF THE INVENTION

*The Coating System*

As mentioned above, the present invention relates to the use of a zinc epoxy primer composition as specified herein in a coating system consisting of:

(i) a first layer of the zinc epoxy primer composition, said primer composition being in wet form when applied to the surface of a substrate and having a volume solids % of at least 82 %; and

(ii) a second layer of top-coat composition comprising a polyurea-based binder system, said top-coat composition being in wet form when applied to the surface of a substrate and having a volume solids % of at least 82 %;

wherein the weighted average volume solids % of the coating system is at least 84 %;
and wherein the volume solids is determined according to ISO 3233 with the modification that drying is carried out at 23°C and 50 % relative humidity for 7 days.

When used herein, the expression "coating system" is intended to mean the combination of the first and second layers in wet form when applied to the surface of a substrate. It should be understood that the second layer is applied subsequent to the first layer so as to be in direct contact with said first layer. It should further be understood that one or more layers of other coating compositions may be applied to the surface of the substrate prior to the application of the first layer, although such other coating layer are generally not necessary or desirable. Moreover, it should be understood that one or more layers of other coating compositions may be applied subsequent to the application of the second layer, although such other coating layer are generally not necessary or desirable.

Hence, in a preferred embodiment, the coating system consists of the above-defined first and second layers, where the first layer is in direct contact with the surface of the substrate and where the second layer is the outermost layer.

The coating systems disclosed herein are designed to cure at ambient temperatures (i.e. typically the temperature at the location at which the coating system is applied, e.g. in paint shops or outdoor where the temperature will depend on the general climate at the geographical location), e.g. at temperatures of 0-50 °C (either in cold or in very hot regions of the world), such as 5-30 °C, in particular about 15-25 °C, such as around 20°C. In other words, the coating system disclosed herein is of the non-thermosetting type. In contrast hereto, other coating systems are of the thermosetting type, which require heating of the substrate with the coating to temperature of several hundred degrees Celsius. Such conditions are of course in practise inapplicable with the types of substrates for which the present coating systems are designed.

*High Volume Solids Percentage*

A particular feature of the coating system of the invention is the very high volume solids % ("VS%") and thereby the low content of volatile organic compounds (VOC).

In fact, the zinc epoxy primer composition has a volume solids % of at least 82 %, such as at least 84 %, *e.g.* at least 85 %. Similarly, the top-coat composition has a volume solids % of at least 82 %, such as at least 84 %, *e.g.* at least 85 %.

This being said, and most importantly, the weighed average volume solids % of the coating system is at least 84 %, such as at least 85 %, *e.g.* at least 86 %.

The volume solids (expressed in %) is often referred to as "VS%". VS% is determined according to ISO 3233 with the modification that drying is carried out at 23°C and 50 % relative humidity for 7 days instead of drying at higher temperatures.

The expression "weighed average volume solids %" refers to average of volume solid percentages taking into account that the zinc epoxy primer composition and the top-coat composition may not be applied with the same wet film thicknesses. If the zinc epoxy primer composition having a VS% of 90 % is applied in a thickness of 200 μm and a top-coat composition having a VS% of 84 % is applied in a thickness of 100 μm, the weighed average volume solids % will be 88 %.

The very low content of VOC renders it possible to establish a fast curing coating system which has a very short "dry-to-handle" time, *i.e.* preferably a "dry-to-handle" time which is less than 11 hours at 20 °C. In certain preferred embodiments, the "dry-to-handle" time is less than 9 hours at 20 °C, or even less than 7 hours at 20 °C. The "dry-to-handle" time is conveniently determined as described in the Examples section.

The Volatile Organic Compound (VOC) of the coating system is important because VOC emissions influence the environment in a negative way and should therefore be kept to a minimum.

The coatings system of the present invention has very low VOC emission compared to the coatings systems as presented in Table 5. VOC can be determined by various methods *e.g.* ISO 11890 or EPA method 24.

*First Layer - The Zinc Epoxy Primer Composition*

The first layer of the zinc epoxy primer composition comprises an epoxy-based binder system.

The zinc epoxy primer composition may further include other constituents as it is described further below. In particular, the zinc epoxy primer composition may include further anticorrosive constituents and/or fibres.

<u>Epoxy-based binder system</u>

The term "epoxy-based binder system" should be construed as the combination of one or more epoxy resins, one or more curing agents and any reactive epoxy diluents.

The epoxy-based binder system is one of the most important constituents of the zinc epoxy primer composition, in particular with respect to the anticorrosive properties.

The epoxy-based binder system comprises one or more epoxy resins selected from aromatic or non-aromatic epoxy resins (*e.g.* hydrogenated epoxy resins), containing more than one epoxy group per molecule, which is placed internally, terminally, or on a cyclic structure, together with one or more suitable curing agents to act as cross-linking agents. Combinations with reactive diluents from the classes of functional glycidyl ethers or esters of aliphatic, cyclo aliphatic or aromatic compounds can be included in order to reduce viscosity and for improved application and physical properties. The binder system can also include reactive acrylic modifiers such as acrylate monomers and oligomers comprising at least two alpha, beta unsaturated carbonyl groups, reacting with the one or more curing agents via a Michael-type addition reaction.

Suitable epoxy-based binder systems are believed to include epoxy and modified epoxy resins selected from bisphenol A, bisphenol F, Novolac epoxies, non-aromatic hydrogenated epoxies, cyclo aliphatic epoxies, glycidyl esters and epoxy functional acrylics or any combinations hereof.

Examples of suitable commercially available epoxy resins are:

Epikote 828, ex Resolution Performance Products (The Netherlands), bisphenol A type
Araldite GY 250, ex Huntsman Advanced Materials (Switzerland), bisphenol A type
DER 664-20, ex Dow Chemicals (Germany), bisphenol A type
Epikote 1001 X 75, ex Resolution Performance Products (The Netherlands), bisphenol A type
Araldite GZ 7071X75BD, ex Huntsman Advanced Materials (Germany), bisphenol A type
DER 352, ex Dow Chemicals (Germany), mixture of bisphenol A and bisphenol F
Epikote 232, ex Resolution Performance Products (The Netherlands), mixture of bisphenol A and bisphenol F
Epikote 862, ex Resolution Performance Products (The Netherlands), bisphenol F type DEN 438-X 80, ex Dow Chemical Company (USA), epoxy novolac
Epikote 154, ex Resolution Performance Products (The Netherlands), epoxy novolac DYD-128, ex Dalian Qihua Chemicals, China, bisphenol A type

Epikote 872-X-75, ex. Hexion (former Resolution performance products, Netherlands), bisphenol A/ epichlorohydrin resin reacted with dimer fatty acids.

The epoxy-based binder system can comprise one or more reactive epoxy diluents.
Examples of suitable commercially available reactive epoxy diluents are:

Polypox R24, ex Ulf Prummer, Germany, aliphatic monofunctional diglycidylether
Araldite DY-L/BD, ex Huntsmann Advanced Materials, Germany, polyoxypropylene-triglycidylether
Grilonit RV 1812, ex EMS-Primid, Switzerland, hexandiol-diglycidylether
Epodil 757, ex Air products Plc, USA, cyclohexane-dimethanoldiglycidylether
Epilox P 13-20, ex Leuna, Germany, Hexanediol diglycedylether.

The zinc epoxy primer composition can comprise one or more epoxy accelerators.
Examples of suitable commercially available epoxy accelerators are:

Ancamine K 54, ex Air Products Plc, United Kingdom, tris-(dimethylamino methyl) phenol TL 0712, ex Vantico Ltd., Germany, phenol free Mannich base
Hiescat HI-K54, ex Keum Jung, Korea, Tris-(dimethylaminomethyl)phenol.

The epoxy-based binder system comprises one or more curing agents selected from compounds or polymers comprising at least two reactive hydrogen atoms linked to nitrogen.
Suitable curing agents are believed to include amines or amino functional polymers selected from aliphatic amines and polyamines (*e.g.* cyclo-aliphatic amines and polyamines), polyamido amines, polyoxy alkylene amines (*e.g.* polyoxy alkylene diamines), aminated polyalkoxy ethers (*e.g.* those sold commercially as "Jeffamines"), alkylene amines (*e.g.* alkylene diamines), aralkyl amines, aromatic amines, Mannich bases (*e.g.* those sold commercially as "phenalkamines"), amino functional silicones or silanes, and including epoxy adducts and derivatives thereof.
Examples of suitable commercially available curing agents are:

Cardolite NC-541, ex Cardanol Chemicals (USA), Mannich base
Cardolite Lite 2001, ex Cardanol Chemicals (USA), Mannich base
Sunmide CX-105X, ex Sanwa Chemical Ind. Co. Ltd. (Singapore), Mannich base
Epikure 3140 Curing Agent, ex Resolution Performance Products (USA), polyamidoamine SIQ Amin 2030, ex SIQ Kunstharze GmbH (Germany), polyamidoamine
Epikure 3115X-70 Curing Agent, ex Resolution Performance Products (USA), polyamidoamine SIQ Amin 2015, ex SIQ Kunstharze GmbH (Germany), polyamidoamine
Polypox VH 40309/12, ex Ulf Prümmer Polymer-Chemie GmbH (Germany), polyoxyalkylene amine
Polypox VH 40294, ex Ulf Prümmer Polymer-Chemie GmbH (Germany), Mannich base
Ancamine 2609, ex Air Products (UK), Mannich base
Adeka Hardener, ex Adeka Corporation (Japan), Mannich base
CeTePox 1490 H, ex CTP Chemicals and Technologies for Polymers (Germany), polyoxyalkylene amine
Epoxy hardener MXDA, ex Mitsubishi Gas Chemical Company Inc (USA), aralkyl amine Diethylaminopropylamine, ex BASF (Germany), aliphatic amine
Gaskamine 240, ex Mitsubishi Gas Chemical Company Inc (USA),aralkyl amine
Cardolite Lite 2002, ex Cardanol Chemicals (USA), Mannich base
Aradur 42 BD, ex Huntsman Advanced Materials (Germany), cycloaliphatic amine
Isophorondiamin, ex BASF (Germany), cycloaliphatic amine
Epikure 3090 Curing Agent, ex Resolution Performance Products (USA), polyamidoamine adduct with epoxy
Crayamid E260 E90, ex Cray Valley (Italy), polyamidoamine adduct with epoxy
Aradur 943 CH, ex Huntsman Advanced Materials (Switzerland), alkylene amine adduct with epoxy

Preferred epoxy-based binder systems comprises a) one or more epoxy resins selected from bisphenol A, bisphenol F and Novolac; and b) one or more curing agents selected from Mannich Bases, polyamido amines, polyoxy alkylene amines, alkylene amines, aralkyl amines, polyamines, and adducts and derivatives thereof.
Preferably the epoxy resin has an epoxy equivalent weight of 100-2000, such as 100-1500 *e.g.* 150-1000 such as 150-700.
Especially preferred epoxy-based binder systems comprises one or more bisphenol A epoxy resins having an epoxy equivalent weight of 150-700 and one or more polyamine or adducts and derivatives thereof.
Preferred epoxy-based binder systems are ambient curing binder systems.

In the zinc epoxy primer composition, the total amount of epoxy-based binder system is in the range of 15-80 %, such as 35-80 %, *e.g.* 40-75 % by solids volume of the zinc epoxy primer composition. In one particularly interesting embodiment, the total amount is in the range of 45-55 % by solids volume.

Without being bound to any particular theory, it is believed that the selection of the ratio between the hydrogen equivalents of the one or more curing agents and the epoxy equivalents of the one or more epoxy resins plays a certain role for the performance of the coating composition.

When used herein, the term "hydrogen equivalents" is intended to cover only reactive hydrogen atoms linked to nitrogen.

The number of "hydrogen equivalents" in relation to the one or more curing agents is the sum of the contribution from each of the one or more curing agents. The contribution from each of the one or more curing agents to the hydrogen equivalents is defined as grams of the curing agent divided by the hydrogen equivalent weight of the curing agent, where the hydrogen equivalent weight of the curing agent is determined as: grams of the curing agent equivalent to 1 mol of active hydrogen. For adducts with epoxy resins the contribution of the reactants before adductation is used for the determination of the number of "hydrogen equivalents" in the complete epoxy-based binder system.

The number of "epoxy equivalents" in relation to the one or more epoxy resins is the sum of the contribution from each of the one or more epoxy resins. The contribution from each of the one or more epoxy resins to the epoxy equivalents is defined as grams of the epoxy resin divided by the epoxy equivalent weight of the epoxy resin, where the epoxy equivalent weight of the epoxy resin is determined as: grams of the epoxy resin equivalent to 1 mol of epoxy groups. For adducts with epoxy resins the contribution of the reactants before adductation is used for the determination of the number of "epoxy equivalents" in the epoxy-based binder system.

Preferably the ratio between the hydrogen equivalents of the one or more curing agents and the epoxy equivalents of the one or more epoxy resins is in the range of 50:100 to 140:100.

Especially preferred epoxy-based binder systems for use in Industrial corrosion protective coatings have a ratio between the hydrogen equivalents of the one or more curing agents and the epoxy equivalents of the one or more epoxy resins in the range of 60:100 to 130:100 such as 80:100 to 120:100, *e.g.* 90:100 to 110:100.

## Anticorrosive Constituents

The zinc epoxy primer composition also comprises a particulate material (*e.g.* a powder) which increases the anticorrosive properties of the coat. Zinc powder or zinc dust, which is well known to incorporate in epoxy primer to produce a zinc epoxy primer, is in this respect of special interest. Zinc powder or zinc dust can partly be replaced by a zinc alloy, e.g. as disclosed in WO 2008/125610. Auxiliary corrosion inhibitor, for example a molybdate, phosphate, tungstate or vanadate, ultrafine titanium dioxide, and/or zinc oxide and/or a filler such as silica, calcined clay, alumina silicate, talc, barytes or mica may also be incorporated.

The $D_{50}$ of the particulate material being in the range of 2.5-30 μm, in particular 2.5-20 μm. With respect to the particle size, it is preferred that the $D_{50}$ of the particulate material is in the range of 2.5-15 μm, and preferably in the range of 2.5-12 μm. Additionally, the $D_{99}$ of the particulate material should preferably be less than 100 μm. The particle size distribution of the particulate material (e.g. zinc or a zinc alloy) is of major importance in painting applications. For example too coarse particulate materials would result in particles sticking through the dry paint film. Therefore, it is highly preferred to use particulate materials with a $D_{50}$ (mean particle size) of less than 30 μm, in particular less than 20 μm. A $D_{50}$ of less than 15 μm is often more preferred, and less than 12 μm is even more preferred. The lower limit of the $D_{50}$ is dictated by economic considerations. At a $D_{50}$ of less than 2.5 μm, a too large fraction of the powder has to be sieved out and recycled for the complete process to run economically. However, other relevant materials include phosphates, aluminium, graphite, carbon black, micaceous iron oxide (MIO), etc.

If present, the amount of the anticorrosive constituent is typically 1-65 % by solids volume of the paint.

In one preferred embodiment, the zinc epoxy primer composition comprises 20-35 % by solids volume of zinc, such as 25-30 % by solids volume of zinc.

The anticorrosive filler material may be present as a combination of one or more of the before-mentioned materials.

The anticorrosive constituents, in particular zinc, are preferably present in the form of a particulate material.

The term "particulate material" is intended to cover both fine spherical or somewhat irregularly shaped particles and other shapes such as flakes, disc, spheres, needles, platelets, fibres and rods. A preferred particulate material is a powder.

It is believed that the coating system generally has excellent anticorrosive properties because zinc is included as described above. Hence, particularly interesting embodiments are those where the rust creep of the dry coating system as determined according to ISO 12944-6 is at the most 1 mm.

When used herein, all amounts stated as % by solids volume of the paint should be understood as % by solids volume of the mixed paint composition ready to be applied, and is based on the constitution of the paint composition.

(In contrast hereto, the expression "volume solids %" is determined experimentally.)

Fibres

The zinc epoxy primer composition may also comprise fibres. Special fibres with high tensile strength will when incorporated in the epoxy matrix increase the ability to withstand higher mechanical stress. This facilitates the possibility to formulate epoxy coatings with even faster curing and higher cracking resistance at the same time.

Generally, "fibres" is intended to cover any fibres within the groups of natural inorganic fibres, synthetic inorganic fibres, natural organic fibres, synthetic organic fibres, and metallic fibres, or mixtures thereof. Without being bound to any specific theory, it is however presently believed that natural inorganic fibres and synthetic inorganic fibres, in particular mineral fibres of these types, are especially preferred.

It is presently believed that the fibres to be used within the present invention should fulfil certain criteria with respect to dimensions in order to provide the improved properties of a coat of the zinc epoxy primer composition. Thus, with respect to average length and average thickness of the fibres which are added to the primer composition during manufacture of the primer composition or mixed with the primer composition before application, such fibres have an average length, of at the most 250 μm and an average thickness of 1-50 μm

Preferred fibres are fibres having an average thickness of 1-25 μm and an average length, of at the most 250 μm, especially an average length of 25-250 μm and an average thickness of 1-25 μm, in particularly an average length of 50-250 μm (such as 50-170 μm) and an average thickness of 2-10 μm. The preferred organic fibres furthermore have a ratio between the average length and the average thickness of at least 2, such as at least 3 *e.g.* at least 5.

The concentration of the fibres is normally in the range of 2-50 % by solids volume of the dry primer composition (*i.e.* the composition devoid of the solvents), such as 3-40 % by solids volume of the dry paint. Especially relevant concentrations of fibres, depending upon the type and size of the fibres, may be 4-35 %, such as 5-30 %, such as 6-25 %, such as 7-20 % by solids volume of the dry paint.

It should be understood that the above ranges refer to the total amount of fibres, thus, in the case where two or more fibre types are utilised, the combined amounts should fall within the above ranges.

At present, especially preferred are mineral fibres such as mineral-glass fibres, wollastonite fibres, tobermorite fibres, attapulgite fibres, volcanic rock fibres, bauxite fibres, rockwool fibres, and processed mineral fibres from mineral wool. Examples of commercially available mineral fibres which are believed to improve the mechanical properties according to the invention are (average fibre length in μm; average fibre thickness in μm):

1. Coatforce CF10, ex Lapinus Fibres BV (The Netherlands), volcanic rock fibre (125;5.5)

2. MS 603 Roxul 1000, ex Lapinus Fibres BV (The Netherlands), volcanic rock fibre (125;5)

3. MS 610 Roxul 1000, ex Lapinus Fibres BV (The Netherlands), (225;5.5)

4. FG 400/060, ex Schwarzwälder Textil-Werke (Germany), E-glass (230;9-14)

5. Nyad G, ex Nyco Minerals (USA), wollastonite (length/diameter ratio 15:1)

6. RCF-160, ex Sumitomo (Japan), C-glass (250;-)

7. Isofrax 1260C High Index, ex Unifrax (United Kingdom) (-;2-3μm)

In a further preferred embodiment, the zinc epoxy primer composition comprises:

35-40 % by solids volume of epoxy binder,
13-18 % by solids volume of curing agent,
25-30 % by solids volume of zinc powder,
1-3 % by solids volume of reactive diluents,
5-10 % by solids volume of pigments and fillers, and
6-12 % by solids volume of additives

*Second Layer - The Polyurea-Based Binder System*

The second layer of a top-coat composition comprises a polyurea-based binder system.

Polyurea-Based Binder System

The term "polyurea-binder system" is intended to mean a binder system having as the primary components one or more di- or poly-isocyanate components and one or more di- or polyamine components. It should be understood that the amine component may be either primary or secondary in nature, *i.e.* they may include either one or two hydrogens ($R-NH_2$ or R-NH-R').

Reaction (curing) of the isocyanate component(s) and the amine component(s) results in the formation of a urea-functionality. Reaction of an isocyanate (R-NCO) with a primary amine ($R'-NH_2$) results in an urea-functionality of the formula R-NH-C(=O)-NH-'R, whereas reaction of an isocyanate (R-NCO) with a secondary amine (R'-NH-R") results in an urea-functionality of the formula R-NH-C(=O)-N(R')-R".

In one particularly interesting embodiment, the one or more di- or polyamine components include a secondary amine. One currently preferred type is the polyurea-based binder system previously described in US 5,126,170. This polyurea coating contains

a) a poly-isocyanate component and

b) an isocyanate-reactive component at least one compound corresponding to the formula (I) below:

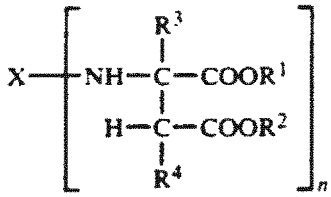

wherein X represents an organic group which has a valence of n and which is inert towards isocyanate groups at temperatures of up to 100 °C;

$R^1$ and $R^2$ each independently is selected from organic groups which are inert towards isocyanate groups at temperatures of up to 100 °C;

$R^3$ and $R^4$ each independently is selected from hydrogen and organic groups which are inert towards isocyanate groups at temperatures of up to 100 °C; and

n is an integer of at least 2.

The cross-linking which takes place is based on an addition reaction between poly-isocyanate component a) and isocyanate-reactive component b), in particular the polyamines containing secondary amino groups, which are also known as "polyaspartic acid derivatives."

Suitable poly-isocyanates for use as poly-isocyanate component a) in the top-coat composition include the known poly-isocyanates of polyurethane chemistry. Examples of suitable low molecular weight poly-isocyanates having a molecular weight of 168 to 300 include hexamethylene diisocyanate, 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues which are obtained in known manner by the phosgenation of aniline/formaldehyde condensates, 2,4-and/or 2,6-diisocyanatotoluene and any mixtures of these compounds.

It is preferred, however, to use derivatives of these monomeric poly-isocyanates, as is conventional in coatings technology. These derivatives include poly-isocyanates containing biuret groups.

The modified poly-isocyanates are particularly preferred: N,N',N"-tris-(6-isocyanatohexyl)-biuret and mixtures thereof with its higher homologues and N,N',N"-tris-(6-isocyanatohexyl)-isocyanurate and mixtures thereof with its higher homologues containing more than one isocyanurate ring.

Isocyanate group-containing prepolymers and semi-prepolymers based on the monomeric simple or modified poly-isocyanates exemplified above and organic polyhydroxyl compounds are also preferred for use as poly-isocyanate component a). These pre-polymers and semi pre-polymers generally have an isocyanate content of 0.5-30 % by weight, preferably 1-20 % by weight, and are prepared in known manner by the reaction of the above mentioned starting materials at an NCO/OH equivalent ratio of 1.05:1 to 10:1 preferably 1.1:1 to 3:1, this reaction being optionally followed by distillative removal of any un-reacted volatile starting poly-isocyanates still present.

The pre-polymers and semi pre-polymers may suitable be prepared from low molecular weight polyhydroxyl compounds having a molecular weight of 62 to 299, such as ethylene glycol, propylene glycol, trimethylol propane, 1,6-dihydroxy hexane; low molecular weight, hydroxyl-containing esters of these polyols with dicarboxylic acids of the type

exemplified hereinafter; low molecular weight ethoxylation and/or propoxylation products of these polyols; and mixtures of the preceding polyvalent modified or unmodified alcohols.

The pre-polymers and semi pre-polymers are, however, preferably prepared from the known relatively high molecular weight polyhydroxyl compounds of polyurea chemistry which have a molecular weight of 300-8000, preferably 1000-5000, as determined from the functionality and the OH number. These polyhydroxyl compounds have at least two hydroxyl groups per molecule and generally have a hydroxyl group content of 0.5-17 % by weight, preferably 1-5 % by weight.

Examples of suitable relatively high molecular weight polyhydroxyl compounds which may be used for the preparation of the pre-polymers and semi pre-polymers include the polyester polyols based on the previously described low molecular weight, monomeric alcohols and polybasic carboxylic acids such as adipic acid, sebacic acid, phthalic acid, isophthalic acid, tetrahydrophthalic acid, hexadydrophthalic acid, maleic acid, the anhydrides of these acids and mixtures of these acids and/or acid anhydrides. Hydroxyl group-containing polylactones, especially poly-ε-caprolactones, are also suitable for the preparation of the pre-polymers and semi pre-polymers.

Polyether polyols, which are obtained in known manner by the alkoxylation of suitable starting molecules, are also suitable for the preparation of the isocyanate group-containing pre-polymers and semi pre-polymers. Examples of suitable starting molecules for the polyether polyols include the previously described monomeric polyols, water, organic polyamines having at least two NH bonds and any mixtures of these starting molecules. Ethylene oxide and/or polylene oxide are particularly suitable alkylene oxides for the alkoxylation reaction. These alkylene oxides may be introduced into the alkoxylation reaction in any sequence or as a mixture.

Also suitable for the preparation of the pre-polymers and semi pre-polymers are the hydroxyl group-containing polycarbonates which may be prepared by the reaction of the previously described monomeric diols with phosgene and diaryl carbonates such as diphenyl carbonate.

It is found that the selection of constituents of polyurea top-coat primer renders it possible to completely eliminate the need for tin-based catalyst. Hence, in particular embodiments of the invention, the polyurea top-coat primer is free of any tin-based catalyst.

Examples of suitable commercially available poly-isocyanate resins are:

Desmodur N3900 (formerly VP2410), ex Bayer (Germany), aliphatic polyisocyanate
Desmodur N3600, ex Bayer (Germany), aliphatic polyisocyanate
Desmodur N3800, ex Bayer (Germany), aliphatic polyisocyanate
Tolonate HDT-LV2, ex Rhodia (France), aliphatic polyisocyanate
Desmodur N3390, ex Bayer (Germany), aliphatic polyisocyanate
Tolonate HDT90, ex Rhodia (France), aliphatic polyisocyanate
Basonat HI 190 B/S, ex BASF (Germany), aliphatic polyisocyanate
Desmodur N75, ex Bayer (Germany), aliphatic polyisocyanate
Bayhydur VP LS 2319, ex Bayer (Germany), aliphatic polyisocyanate
Tolonate IDT 70B, ex Rhodia (France), aliphatic polyisocyanate

Component b) is based in whole or in part on compounds corresponding to formula 1 wherein $R^1$ to $R^4$ and n have the meanings previously set forth. It is particularly preferred to use "poly aspartic acid derivatives" corresponding to the above formula wherein X represents a divalent hydrocarbon group obtained by the removal of the amino groups from 1,4-diaminobutane, 1,6-diaminohexane, 2,2,4- and 2,4,4-trimethyl-1,6-diaminohexane, 1-amino-3,3,5-trimethyl-5-aminomethyl-cyclohexane, 4,4'-diamino-dicyclohexyl methane or 3,3-dimentyl-4,4'-diamino-dicyclohexyl methane, and n is 2.

The preferred starting components b) also include those compounds corresponding to formula (I) wherein $R^1$ and $R^2$ represent for methyl or ethyl groups and $R^3$ and $R^4$ represent hydrogen.

Suitable polyamines include ethylene diamine, 1,2-diaminopropane, 1,4-diaminobutane, 1,6-diaminohexane, 2,5-diamino-2,5-dimethylhexane, 2,2,4-and/or 2,4,4-trimethyl-1,6-diaminohexane, 1,11-diaminoundecane, 1,12-diaminododecane, 1-amino-3,3,5-trimethyl-5-aminomethyl-cyclohexane, 2,4-and/or 2,6-hexahydrotoluylene diamine, 2,4'-and/or 4,4'-diamino-dicyclohexyl methane and 3,3'-dimethyl-4,4'-diamino-dicyclohexyl methane. Aromatic polyamines such as 2,4-and/or 2,6-diaminotoluene and 2,4'-and/or 4,4'-diaminodiphenyl methane are also suitable but less preferred. Relatively high molecular weight polyether polyamines containing aliphatically bound primary amino groups, for example, the products marketed under the Jeffamine trademark, are also suitable.

Examples of optionally substituted maleic or fumaric acid esters suitable for use in the preparation of the compounds corresponding for formula (I) include dimethyl, diethyl and din-butyl esters of maleic acid and fumaric acid and the corresponding maleic or fumaric acid esters substituted by methyl in the 2- and/or 3-position.

The preparation of the "poly aspartic acid derivatives" corresponding to Formula (I) from the above mentioned starting materials may be carried out, for example, at a temperature of 0 °C to 100 °C, using the starting materials in

such proportions that at least 1, preferably 1, olefinic double bond is present for each primary amino group. Excess starting materials may be removed by distillation after the reaction. The reaction may be carried out solvent-free or in the presence of suitable solvents such as methanol, ethanol, propanol, dioxane and mixtures of such solvents. The binders present in the coating compositions according to the invention are preferably based on mixtures of poly-isocyanate component a) with the secondary polyamines corresponding to Formula (I) or mixtures of poly-isocyanate component a) with the secondary polyamines corresponding to Formula (I) and other isocyanate-reactive compounds.

These other optionally used isocyanate-reactive compounds are preferably organic polyhydroxyl compounds known from polyurethane chemistry and include both the low molecular weight polyhydroxyl compounds and the relatively high molecular weight polyhydroxyl compounds previously set forth for the preparation of the pre-polymers and semi pre-polymers suitable for use as poly-isocyanate component a).

Particularly preferred isocyanate-reactive compounds which may be used as a portion of component b) are the hydroxy functional poly acrylates known for use in polyurethane coatings. These compounds are hydroxyl-containing copolymers of olefinically unsaturated compounds having a number average molecular weight (Mn) determined by vapour pressure or membrane osmometry of 800-50,000, preferably 1000-20,000 and more preferably 5000-10,000, and having a hydroxyl group content of 0.1-12 % by weight, preferably 1-10 % by weight and most preferably 2-6 % by weight. The copolymers are based on olefinic monomers containing hydroxyl groups and olefinic monomers which are free from hydroxyl groups. Examples of suitable monomers include vinyl and vinylidene monomers such as styrene, $\alpha$-methyl styrene, o- and p-chloro styrene, o-, m- and p-methyl styrene, p-tert.-butyl styrene; acrylic acid; (methy)acrylonitrile; acrylic and methacrylic acid esters of alcohols containing 1 to 8 carbon atoms such as ethyl acrylate, methyl acrylate, n- and isopropyl acrylate, n-butyl acrylate, 2-ethylhexyl acrylate, 2-ethylhexyl methacrylate, iso-octyl acrylate, methyl methacrylate, ethyl methacrylate, butyl methacrylate and iso-octyl methacrylate; diesters of fumaric acid, itaconic acid or maleic acid having 4 to 8 carbon atoms in the alcohol component; (methy)acrylic acid amide; vinyl esters of alkane monocarboxylic acids having 2 to 5 carbon atoms such as vinyl acetate or vinyl propionate; and hydroxyalkyl esters of acrylic acid or methacrylic acid having 2 to 4 carbon atoms in the hydroxyalkyl group such as 2-hydroxyethyl-, 2, hydroxypropyl-, 4-hydroxybutyl-acrylate and methacrylate and trimethylol propane-mono- or pentaerythritomono-acrylate or methyacrylate. Mixtures of the monomers exemplified above may also be used for the preparation of the hydroxy functional poly acrylates.

Mixtures of the polyhydroxyl compounds previously described may be used as a portion of component b).

In the binders used according to the invention, components a) and b) are used in amounts sufficient to provide an equivalent ratio of isocyanate groups to isocyanate-reactive groups of 0.8:1 to 20:1, preferably 0.8:1 to 2:1, more preferably 0.8:1 to 1.5:1, even more preferably 0.8:1 to 1.2:1 and most preferably about 1:1. The optional poly hydroxyl compound is present in component b) in an amount such that up to 20 hydroxyl groups are present for each secondary amino group from the compounds corresponding to formula (I), preferably the equivalent ratio of hydroxyl groups to secondary amino groups is 10:1 to 1:10.

Examples of suitable commercially available isocyanate-reactive resins are:

Desmophen NH 1220, ex Bayer (Germany), Poly aspartic based polyurea binder
Desmophen NH 1420, ex Bayer (Germany), Poly aspartic based polyurea binder
Desmophen NH 1520, ex Bayer (Germany), Poly aspartic based polyurea binder

*Other Constituents of the Zinc Epoxy Primer and Top-Coat Compositions*

Each of the zinc epoxy primer composition and the top-coat compositions may further comprise other paint constituents as will be apparent for the person skilled in the art. Examples of such paint constituents are solvents, pigments, fillers, additives (*e.g.* thickening agents, wetting agents, suspending agents, anti-sag agents, anti-sediment agents, stabilizers, coalescing agents, and thixothropic agents).

The compositions typically comprise a solvent or solvents. Examples of solvents are alcohols such as water, methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 1-methoxy-2-propanol, 2-butoxyethanol and butyl diglycol; esters such as methoxypropyl acetate, n-butyl acetate and 2-ethoxyethyl acetate; and mixtures thereof.

Typical examples of solvents useful for the zinc epoxy primer composition are alcohols such as water, methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 1-methoxy-2-propanol, 2-butoxyethanol and butyl diglycol; esters such as methoxypropyl acetate, n-butyl acetate and 2-ethoxyethyl acetate; and mixtures thereof.

Typical examples of solvents useful for the top-coat composition are aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; esters such as methoxypropyl acetate, n-butyl acetate and 2-ethoxyethyl acetate; and mixtures thereof.

*Preparation of the Zinc Epoxy Primer and Top-Coat Compositions*

The zinc epoxy primer composition and the top-coat composition may be prepared by any suitable technique that is commonly used within the field of paint production. Thus, the various constituents may be mixed together using a high speed disperser, a ball mill, a pearl mill, a three-roll mill etc. The paints according to the invention may be filtered using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration.

The zinc epoxy primer and top-coat compositions to be used herein are conveniently prepared by mixing two or more components *e.g.* two pre-mixtures. It should be understood that when reference is made to the paint composition, it is the mixed paint composition ready to be applied.

As an example, the epoxy primer base component and the curing agent component for the epoxy primer composition are mixed (*e.g.* in a ratio of approx. 3:1 by volume) by adding the curing agent to the base and stir well until the mixture is homogeneous. The mixture is immediately ready for application, *e.g.* by spray application.

As an example, the polyurea top-coat base component and the curing agent for the polyurea top-coat composition are mixed (*e.g.* in a ratio of approx. 3:1 by volume) by adding the curing agent to the base and stir well until the mixture is homogeneous. The mixture is then immediately ready for application, *e.g.* by spray application.

*Application of the Zinc Epoxy Primer and Top-Coat Compositions*

The zinc epoxy primer composition and the top-coat composition can be applied to a substrate (in particular a steel structure) by well known standard application methods like conventional air-spraying or by airless- or airmix-spraying equipment (or alternatively by means of a brush or a roller, in particular when used as a stripe coat). Due to the relatively short pot life of the coating systems of the present invention, two-component spray systems with automatic measure of the mixing ratio are preferred.

*Film Thickness*

The coating system is typically applied in a total dry film thickness of 120-400 μm, such as 150-350 μm.

In contrast to many of the available coating systems, it is typically preferred that the dry film thickness of the first layer (the zinc epoxy primer) is higher that the dry film thickness of the second layer (the top-coat).

This being said, it is preferred that the dry film thickness of the first layer is at least 100 μm.

In one embodiment which is particularly applicable for, *e.g.,* inner structures, the coating system is selected such that:

(i) the dry film thickness of the first layer is 80-160 μm, such as 100-140 μm; and

(ii) the dry film thickness of the second layer is 40-120 μm, such as 60-100 μm.

In another embodiment which is particularly applicable for, e.g., windmill towers, the coating system is selected such that:

(i) the dry film thickness of the first layer is 100-180 μm, such as 120-160 μm; and

(ii) the dry film thickness of the second layer is 60-140 μm, such as 80-120 μm.

In still another embodiment which is particularly applicable for, *e.g.,* offshore purposes, the coating system is selected such that:

(i) the dry film thickness of the first layer is 160-240 μm, such as 180-220 μm; and
(ii) the dry film thickness of the second layer is 80-160 μm, such as 100-140 μm.

*Alternative Coating System*

An alternative to the use of the zinc epoxy primer composition in a coating system described above is the use of the zinc epoxy primer composition in a coating system consisting of:

(i) a first layer of the zinc epoxy primer composition, said zinc epoxy primer composition being in wet form when applied to the surface of a substrate and having a volume solids % of at least 86 %; and

(ii) a second layer of top-coat composition comprising a polyurea-based binder system, said top-coat composition being in wet form when applied to the surface of a substrate and having a volume solids % of at least 78 %;

wherein the weighted average volume solids % of the coating system is at least 82 %, such as at least 83 % or at least 84 %; and wherein the volume solids is determined according to ISO 3233 with the modification that drying is carried out at 23 °C and 50 % relative humidity for 7 days.

Except for the volume solids % of the zinc epoxy primer composition and the volume solids % of the top-coat composition, the coating system follows the directions, embodiments, and variants described for the coating system described further above (*mutatis mutandis*), including the details in the sections "The Coating System", "High Volume Solids Percentage", "First Layer - The Zinc Epoxy Primer Composition", "Second Layer - The Polyurea-Based Binder System", "Other Constituents of the Zinc Epoxy Primer and Top-Coat Compositions", "Preparation of the Zinc Epoxy Primer and Top-Coat Compositions", "Application of the Zinc epoxy Primer and Top-Coat Compositions", and "Film Thickness".

In fact, the zinc epoxy primer composition has a volume solids % of at least 86 %, such as at least 87 %, *e.g.* at least 88 %. Similarly, the top-coat composition has a volume solids % of at least 78 %, such as at least 79 %, *e.g.* at least 80 %.

This being said, and most importantly, the weighed average volume solids % of the coating system is at least 82 %, such as at least 83 %, *e.g.* at least 84 %.

*Preferred Embodiment*

In view of the preliminary results, the invention in particular provides a coating system suitable for aggressive corrosive environments, consisting of:

(i) a first layer of a zinc epoxy primer composition comprising an epoxy-based binder system and 25-30 % by solids volume of the primer composition of zinc, said primer composition having a volume solids % of at least 82 %; and

(ii) a second layer of top-coat composition comprising a polyurea-based binder system, said top-coat composition having a volume solids % of at least 82 %, and said binder system comprising an isocyanate-reactive component of the formula (I):

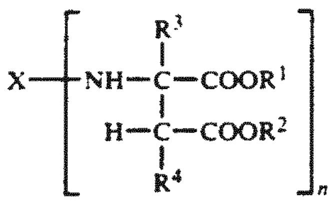

wherein X represents an organic group which has a valence of n and which is inert towards isocyanate groups at temperatures of up to 100 °C;

$R^1$ and $R^2$ each independently is selected from organic groups which are inert towards isocyanate groups at temperatures of up to 100 °C;

$R^3$ and $R^4$ each independently is selected from hydrogen and organic groups which are inert towards isocyanate groups at temperatures of up to 100 °C; and

n is an integer of at least 2;

wherein the weighed average volume solids % of the coating system is at least 84 %; and

wherein the dry film thickness of the first layer is higher than the dry film thickness of the second layer, said first layer having a dry film thickness of at least 100 μm.

According to the alternative coating system described above, the invention further provides a coating system suitable for aggressive corrosive environments, consisting of:

(i) a first layer of a zinc epoxy primer composition comprising an epoxy-based binder system and 25-30 % by solids volume of the primer composition of zinc, said primer composition having a volume solids % of at least 86 %; and

(ii) a second layer of top-coat composition comprising a polyurea-based binder system, said top-coat composition having a volume solids % of at least 78 %, and said binder system comprising an isocyanate-reactive component of the formula (I):

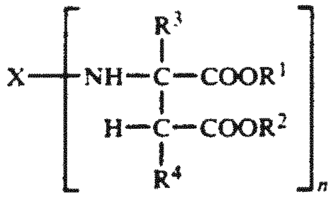

wherein X represents an organic group which has a valence of n and which is inert towards isocyanate groups at temperatures of up to 100 °C;

$R^1$ and $R^2$ each independently is selected from organic groups which are inert towards isocyanate groups at temperatures of up to 100 °C;

$R^3$ and $R^4$ each independently is selected from hydrogen and organic groups which are inert towards isocyanate groups at temperatures of up to 100 °C; and

n is an integer of at least 2;

wherein the weighed average volume solids % of the coating system is at least 82 %, such as at least 83 %, or at least 84 %; and

wherein the dry film thickness of the first layer is higher than the dry film thickness of the second layer, said first layer having a dry film thickness of at least 100 μm.

In particularly interesting embodiments of the above coating systems, the "dry-to-handle" time of the whole coating system is less than 11 hours, such as less than 9 hours, in particular less than 7 hours, at 20 °C.
In further interesting embodiments hereof, the rust creep of the dry coating system as determined according to ISO 12944-6 is at the most 1 mm.

*Coated Structure*

The present invention further relates to a coated structure carrying on at least a part of the surface thereof a coating system as described above in dry form.
Such a structure is typically a steel or iron structure, in particular steel. Interesting examples hereof are structures such as off-shore platforms, windmill towers, steel chimneys, power stations, steel bridges, cranes, rail cars, containers, wind turbines, etc. in costal, off-shore, or industrial environments, but also tidal zone areas where fast salt water resistance is required. Of particular interest are windmill towers.

*A Method for the Establishment of a Coated Structure*

The present invention also relates to the use of the herein-described zinc epoxy primer composition in a method for the establishment of a coated structure using a coating system consisting of a zinc epoxy primer composition and a

top-coat composition, said primer composition comprising an epoxy-based binder system and said a top-coat composition comprising a polyurea-based binder system, said method comprising:

(i) applying the zinc epoxy primer composition in wet form onto a predetermined part of the surface of the structure thereby forming a curable primer film on said surface,

(ii) allowing said curable primer film to at least partially cure thereby forming an epoxy primer coat,

(iii) applying the top-coat composition onto the epoxy primer coat thereby forming a curable top-coat film on said epoxy primer coat, and

(iv) allowing said curable top-coat film to cure, and if necessary allowing said epoxy primer coat to fully cure, thereby forming a cured coating system consisting of the epoxy primer coat and a polyurea top-coat;

wherein said primer composition has a volume solids % of at least 82 %, said top-coat composition having a volume solids % of at least 82 %; and the weighted average volume solids % of the coating system being at least 84 %, or wherein said primer composition has a volume solids % of at least 86 %, said top-coat composition having a volume solids % of at least 78 %; and the weighted average volume solids % of the coating system being at least 82 %;
and wherein the volume solids is determined according to ISO 3233 with the modification that drying is carried out at 23 °C and 50 % relative humidity for 7 days.

In a particularly interesting embodiment, the zinc epoxy primer composition comprises 20-35 % by solids volume of zinc, such as 25-30 % by solids volume of zinc.

Otherwise, the method of the invention can be further specified in accordance with the details disclosed above in relation to the coating system, the preferred embodiment, the coated structure, etc.

*Novel Primer Compositions*

In view of the details disclosed above and the preliminary results obtained, it is believed that the zinc epoxy primer compositions (see above) which are useful in the coating system and in the method disclosed herein are novel *per se.*

Hence, the present invention also provides a zinc epoxy primer composition comprising an epoxy-based binder system and 20-40 % by solids volume of the primer composition of zinc; said primer composition having a volume solids % determined according to ISO 3233 with the modification that drying is carried out at 23 °C and 50 % relative humidity for 7 days of at least 82 %, such as at least 84 %, or at least 86%. In preferred embodiments hereof, the epoxy-based binder system comprises a curing agent selected from Mannich bases, aliphatic polyamines and modified aliphatic polyamines. In specially preferred embodiments hereof, the epoxy-based binder system comprises a curing agent selected from Mannich bases.

Preferably, the "dry-to-handle" time of the zinc epoxy primer composition is less than 5 hours, such as less than 4 hours, in particular less than 3 hours, at 20 °C.

Also preferably, the "dry-to-walk-on" time of the zinc epoxy primer composition is less than 5 hours, such as less than 4 hours, in particular less than 3 hours, at 20 °C.

In a further preferred embodiment, said curing agent is at least partly further reacted with a glycidyl ether functional reactive diluent.

For a further specification of the zinc epoxy primer composition, see further above.

## EXAMPLES

*Materials*

Commercial paint systems used in examples

HEMPADUR ZINC 17320 (ex Hempel A/S) is a two-component zinc rich epoxy paint. It cures to a strong and corrosion resistant coating. Recommended use: As a primer on steel in medium to severely corrosive environment or for on-line application on containers. Volume solids %: 61.

HEMPADUR 47140 (ex Hempel A/S) is a two-component polyamide adduct cured, high build epoxy paint which combines a relatively high volume solids content with a short drying time. Recommended use: As a primer in mild to medium atmospheric environments or as an intermediate or finishing coat in epoxy systems in medium to severely corrosive atmospheric environment or as a finishing coat where the usual outdoor cosmetic appearance of epoxy paints

is acceptable. Volume solids %: 70.

HEMPATHANE TOPCOAT 55210 (ex Hempel A/S) is a two-component, semi-gloss acrylic polyurethane coating, cured with aliphatic isocyanate, with good gloss and color retention. Recommended use: As a finishing coat for protection of structural steel in severely corrosive atmospheric environment, where light-fastness and gloss retention are required. Volume solids %: 51.

PERMATEX NCG BASE COAT (ex Sika GmbH) is a two-component fast drying low solvent epoxy primer. Recommended use: As a long lasting corrosion protection for wind turbines. Volume solids %: 81.

PERMACOR 2230 VHS (ex Sika GmbH) is a two-component low solvent fast drying acryl-polyurethane top-coat. Recommended use: As a long lasting weather resistant coat for corrosive environment. Volume solids %: 70.

INTERZINC 52 (ex International) is a two-component, metallic zinc rich epoxy primer. Recommended use: As a high performance primer for aggressive environments. Volume solids %: 59.

INTERCURE 99 (ex International) is a two-component DTM primer finish polyurethane coating. Recommended use: As a Direct to Metal (DTM) finish coat for mild to medium corrosive environments or as top-coat on a zinc epoxy primer for severe corrosive environments. Volume solids %: 80.

Composition of the Primers and Top-coats

Table 1: Composition of Primer A (parts by weight)

| | **Primer A** |
|---|---|
| **Component 1: Epoxy primer base** | **214.6** |
| **Binder** | **36.0** |
| Bisphenol A-Diglycidylether epoxy binder<br>*Dyo 128,* ex Dilian Qihua Chemicals China | 36.0 |
| | |
| **Additives** | **8.4** |
| Defoamers, wetting agents, rheological additives, plasticizers, adhesion promoters, etc. | 8.4 |
| | |
| **Solvents** | **10.9** |
| Xylene | 6.3 |
| Butyl alcohol | 2.7 |
| Benzyl alcohol | 1.9 |
| | |
| **Pigments** | **159.3** |
| Zinc powder<br>*Zinc Metal pigment 4P32,* ex Umicore Belgium | 153.0 |
| Aluminum pigment<br>*CB 105 in WS/HA*, ex Carlfors Bruk Sweden | 6.3 |
| | |
| | |
| **Component 2: Curing agent for epoxy primer base** | **33.3** |
| | |
| **Epoxy adduct intermediate** | **14.7** |
| Curing agent of Mannich base and modified aliphatic polyamine<br>*Ancamine 2609,* ex Air Products UK | 12.9 |

(continued)

| | Primer A |
|---|---|
| Hexanediol diglycidylether binder<br>*Epilox P 13-20,* ex Leuna Germany | 1.3 |
| Tris-(dimethylaminomethyl) phenol epoxy accelerator<br>*Hiescat HI-54K,* ex Keum Jung Korea | 0.5 |
| | |
| **Additives** | **2.1** |
| Defoamers, rheological additives, adhesion promoters, etc. | 2.1 |
| | |
| **Solvents** | **3.3** |
| Xylene | 3.3 |
| | |
| **Fillers and pigments** | **13.2** |
| Red iron oxide<br>*Bayferrox Red 4130,* ex lanxess Shanghai Pigments China | 3.2 |
| Calcium carbonate extender<br>*Zetafil CST 2,* ex Mikrofill k Zafranas Greece | 10.0 |
| | |
| **Volume solids % (determined as described herein)** | **87 %** |

Table 2: Composition of Top-coats 1-3 (parts by weight)

| | **Top-coat 1** | **Top-coat 2** | **Top-coat 3#** |
|---|---|---|---|
| **Component 1: Polyurea top coat base** | **131.5** | **129.4** | **129.3** |
| | | | |
| **Binder** | **40.0** | **39.0** | **33.3** |
| Polyaspartic acid ester<br>*Desmophen NH 1420,* ex Bayer AG USA | 40.0 | 39.0 | 33.3 |
| | | | |
| **Additives:** | **7.5** | **7.9** | **9.7** |
| Water scavengers, rheological additives, wetting agents, matting agents, light stabilizers, adhesion promoters, thickening agents, defoamers, wetting agents, adhesion promoters, plasticizers, antisag, antisediments agents, etc. | 7.5 | 7.9 | 9.7 |
| | | | |
| **Solvents** | **14.0** | **16.1** | **25.9** |
| Butyl acetate | 7.0 | 3.6 | 6.7 |
| Methoxy propyl acetate | | 4.6 | 8.0 |
| Xylene | 7.0 | 4.2 | 5.7 |
| Aromatic hydrocarbon, medium broiling | | 3.7 | 5.5 |
| | | | |

(continued)

| | Top-coat 1 | Top-coat 2 | Top-coat 3# |
|---|---|---|---|
| **Fillers and pigments** | **70.0** | **66.4** | **60.4** |
| Titanium dioxide<br>*Tioxide TR81,* ex Huntsmann UK | 50.0 | 11.0 | 10.0 |
| Carbon black<br>*Special Black 100,* ex. Evonik Degussa, Germany | | 0.1 | 0.1 |
| Iron oxide yellow<br>*Bayferrox 920, ex.* Lanxess, Germany | | 0.3 | 0.3 |
| Barium sulphate extender<br>*Microbarite EB,* ex Carban Portugal | 20.0 | 55.0 | 50.0 |
| | | | |
| | | | |
| **Component 2: Curing agent for polyurea top coat base** | **28.3** | **28.3** | **22.6** |
| Aliphatic poly isocyanate<br>*Tolonate HDT-LV2,* ex Rhodia France | 28.3 | 28.3 | 22.6 |
| | | | |
| **Volume solids (determined as defined herein)** | **88 %** | **85 %** | **79 %** |
| # Top-coat 3 is a top-coat pertaining to the "Alternative Coating System" described herein. | | | |

*Preparation of the Paint Compositions*

Manufacturing of Epoxy Primer Base

Add binder, defoamer, wetting agent, and rheological additive under agitation. Grind for 10 min. Add xylene, zinc dust, and aluminum pigment while stirring. Grind to max. 50 μm. Cool the mill base with butanol, plasticizer, and benzyl alcohol. Add adhesion promoter when the temperature is below 50 °C. Adjust viscosity with xylene.

Manufacturing of Epoxy Primer Curing Angent

Charge curing agent: Mannich base, modified aliphatic polyamine. Mix and add under agitation the epoxy binder and leave it for 24 hours. Add epoxy accelerator. Mix approx. 50 % of the adduct with defoamer, rheological additive, pigment and extender. Grind to 50 μm, temperature minimum 50 °C. Add the rest of the adduct. Add xylene and stir well. Add adhesion promoter and mix.

Preparation of the Zinc Epoxy Primer Composition

The epoxy primer base component and the curing agent component for the epoxy primer is mixed in ratio 3:1 by volume by adding the curing agent to the base and stir well until the mixture is homogeneous. The mixture is immediately ready for application.

Manufacturing of Polyurea Top-Coat Base

Charge binder Mix and add under agitation water scavenger, rheological additive I, wetting agent, pigment, extender, and matting agent. Grind to 40 μm. Add light stabilizer, rheological additive II under high speed. Add butyl acetate and adhesion promoter. Adjust viscosity with xylene.

Manufacturing of Polyurea Top-Coat Curing Angent

The curing agent consists only of the binder component.

Preparation of the Polyurea Top-Coat Composition

The polyurea top coat base component and the curing agent for the polyurea top coat is mixed in ratio 3:1 by volume by adding the curing agent to the base and stir well until the mixture is homogeneous. The mixture is immediately ready for application.

Application Procedure

The coatings of the present invention can be applied by well known standard application methods like conventional air spraying or by air-less or air-mix spraying equipment. Due to the relatively short pot life of the coating systems of the present invention, two-component spray systems with automatic measure of the mixing ratio are preferred.

*Test Methods*

Determination of Volume solids %

Volume solids % (VS%) is determined according to ISO 3233 with the modification that drying is carried out at 23 °C and 50 % relative humidity for 7 days.

Ten test items (i.e. ten-fold repetition) are prepared.

The Volume Solids (VS) figure expresses in percentage the ratio:

(Dry film thickness measured after 7 days) / (Wet film thickness measured immediately after application) x 100%.

Volume solids are usually slightly higher than the theoretical value (referred to as "solids volume"), which is found by a calculation based on the paint composition taking specific gravity and solid content of each individual raw material into consideration. Volume solids take into account that small amounts of solvents are usually retained, and that air may be entrapped in the dry paint film either in the form of vacuoles or as interstices. Volume solids are in general in better agreement with practical measurements of dry film thickness than the theoretical value.

Determination of "dry-to-handle" time

The test method is used for determining the "dry-to-handle" time. The freshly painted panels (DFT typically 120-400 μm) are applied a pressure of 100 $kg/cm^2$ for 3 minutes after the application of the outermost paint coat. This pressure is applied in order to simulate the pressure applied by tools and equipment used when handling and transporting the coated object. A Teflon-coated steel block (base area 3.14 $cm^2$) was pressed towards the painted surface by means of a pneumatic compression machine with a mobile arm. If the paint is not "dry-to-handle", the paint will ooze out from underneath the pressure block resulting in a visible indentation mark.

The appearance of the painted surface, resulting from the pressure applied, is rated on a scale from 1 to 5, where 1 is unsatisfactory and 5 is perfect with no visible mark after testing. Any rating of 3 or above is termed "acceptable". The pressure is applied at intervals of 1 hour after application of the outermost paint coat (starting a full number of hours after application when the panel was considered ready for testing) (a new panel for each test) and until a rating of 5 is obtained, or until no more panels are available.

The definition of "dry-to-handle" according to this test is the time after application of the outermost coat required in order to obtain a rating of 5. After this period of time, the paint surface is sufficiently hardened to be handled with care without coming off/being damaged.

Determination of the "dry-to-walk-on" time

The "dry-to-walk-on" time is determined essentially as the dry-to-handle time, however using a pressure of 5 $kg/cm^2$. This pressure is applied in order to simulate the pressure applied by the shoes or boots of a person walking on the surface coated with the primer composition.

Hence, the freshly painted panels (DFT typically 50-150 μm) are applied a pressure of 5 $kg/cm^2$ for 3 minutes after the application of the primer layer. A Teflon-coated steel block (base area 25 $cm^2$) was pressed towards the painted surface by means of a pneumatic compression machine with a mobile arm. If the paint is not "dry-to-walk-on", the paint will ooze out from underneath the pressure block resulting in visible indentation marks.

The appearance of the painted surface, resulting from the pressure applied, is rated on a scale from 0 to 5,

where 1 is unsatisfactory and 5 is perfect with no visible mark after testing. The pressure is applied at intervals of 1 hour after application of the primer (starting a full number of hours after application when the panel was considered ready for testing) (a new panel for each test) and until a rating of 5 is obtained, or until no more panels are available.

The definition of "dry-to-walk-on" according to this test is the time after application of the outermost coat required in order to obtain a rating of 5. After this period of time, the paint surface is sufficiently hardened to be walked on without coming off/being damaged.

Corrosion Test - Method I

a) Salt Spray Test (SST) - Method I

Salt spray test according to ASTM B 117 (ISO 9227 (formerly ISO 7253)). Test for evaluation of corrosion resistance in salt spray or reproducing corrosion that occurs in atmosphere containing salt spray or splash. Constant spray with 5 % NaCl solution at 35 °C. When the test is stopped, blisters and rust are evaluated according to ASTM D 714 (ISO 4628-2) and ASTM D 610 (ISO 4628-3), respectively. Adhesion is evaluated according to X-cut method according to ASTM D 3359, method A (see below).

b) Adhesion Test (ADH) - Method I

Adhesion test is used to evaluate the adhesion of a paint system to the substrate and between coats (layers).

X-cut according to ASTM D 3359, method A. An "X" is cut into the film to the substrate, pressure tape (TESAPACK 4287) is applied over the "X" and then removed, and adhesion is evaluated by comparison with descriptions and pictures. The method is used to establish whether the adhesion of the coating to the substrate may occur between the coats (adhesive break) or in the coating (cohesive break). The type of rupture is reported, and the severity is judged on a scale from 5 (perfect) to 0 (poor).

Corrosion Test - Method II

The coating systems were evaluated according corrosion category C5-M, high, cf. ISO 12944-6. The overall evaluation was rated either "Pass" or "Fail" in accordance with the ISO 12944 standard.

Panel dimension is 70x150x5 mm, with a surface roughness (profile) similar to ISO 8503-1 medium (G).

The evaluation consisted of the following tests a)-c):

a) ADH - Reference panels

A set of three reference panels were prepared for each system in order to evaluate the adhesion on unexposed panels according to ISO 4624, pull-off test.

b) BBT - Blister Box Test

The Blister Box Test was conducted according to ISO 6270-1. This method was performed in order to evaluate the water resistance of a coating system using controlled condensation. Three panels were used for each test.

The panel surface with the coating system were exposed to 40°C, saturated water vapour, at an angle of 15° to the horizontal. The reverse side of the panel was exposed to room temperature. After ending of the exposure (720 hours), blistering and rust were evaluated according to ISO 4628-2 and ISO 4628-3, respectively. Cracking was evaluated according to ISO 4628-4. Adhesion was evaluated according to ISO 4624 (pull-off tests). The actual adhesion test was performed 48 hours after the end of the exposure.

c) SST - Salt Spray Test - Method II

The Salt Spray Test was conducted according to ISO 9227. This method was performed in order to evaluate the corrosion resistance of a coating system by reproducing the corrosion that occurs in an atmosphere containing salt spray or splash. Six panels were used for each test.

The operation conditions of the salt spray test were constant spray with 5% NaCl solution at 35°C. After ending of the exposure (1440 hours), blistering and rust were evaluated on both panel and around the score (in mm from centre), according to ISO 4628-2 and ISO 4628-3, respectively. Cracking was evaluated according to ISO 4628-4. Adhesion was evaluated according to ISO 4624 (pull-off tests). At score the paint film was removed, and the width of the rusting was measured at nine points, where from the M-max and M-avg. values were calculated. The actual adhesion test is

performed 48 hours after the end of the exposure.

*Results*

Corrosion Test - Method I

A coated panel was exposed to the Salt Spray Test and was exposed for 2171 hours. Subsequently, the panel was evaluated in accordance with the test details.

| **Table 3: Corrosion Test - Method I (exposure 2171 hours)** | | | | | |
|---|---|---|---|---|---|
| System 1. coat/2. coat | Recoating interval (days) | DFT (μm) | Blistering | Rust creep (mm) | Adhesion |
| Permatex NCG Base Coat/ Permacor 2230 VHS | 1 | 403 | None | Not evaluated | 5 |
| Model paint: Primer A/ Top-coat 1 | 1 | 317 | None | <1 | 5 |

Both tested systems showed excellent performance blistering and perfect adhesion after a very aggressive anticorrosive test. The coating system according to the invention further showed only minimal rust creep (<1 mm).

Dry-to-handle time

| **Table 4: Dry-to-handle time** | | | | | |
|---|---|---|---|---|---|
| System 1. coat/2. coat | DFT (μm) | Hours after last application | Pressure ($kg/cm^2$) | Time of pressure | Evaluation |
| Primer A/Top-coat 1 | 277 | 3 | 100 | 3 minutes | 5 |

The results from the "dry-to-handle" time test show that the coating system of Primer A and Top-coat 1 has superior dry-to-handle time, as a pressure of 100 $kg/cm^2$ leaves no visible mark after indentation (rated 5).

Process time/VOC

| **Table 5: Process time and VOC values (240 μm systems)** | | | | | |
|---|---|---|---|---|---|
| System 1. coat/2. coat/3. coat (if any) | DFT (μm) | ¤Process time in paint shop (hours) | Volume solids % | VOC for coat (g/L) | #Total VOC for whole system ($g/m^2$) |
| Hempadur zinc 17320 | 50 | | 61 | 364 | |
| Hempadur 47140 | 140 | | 70 | 291 | |
| Hempathane top coat 55210 | 50 | | 51 | 439 | |
| **Total for system** | **240** | **14** | **64@** | | **132** |
| Permatex NCG base coat | 160 | | 81¤ | 170 | |
| Permacor 2230/VHS | 80 | | 70¤ | 248 | |
| **Total for system** | **240** | **13.5** | **77@** | | **62** |

(continued)

| Table 5: Process time and VOC values (240 μm systems) | | | | | |
|---|---|---|---|---|---|
| System 1. coat/2. coat/3. coat (if any) | DFT (μm) | ¤Process time in paint shop (hours) | Volume solids % | VOC for coat (g/L) | #Total VOC for whole system (g/m²) |
| Interzinc 52 | 60 | | 59¤ | 340 | |
| Intercure 99 | 180 | | 80¤ | 205 | |
| **Total for system** | **240** | **6** | **75@** | | **80** |
| Primer A | 140 | | 87 | 80 | |
| Top-coat 1 | 100 | | 88 | 75 | |
| **Total for system** | **240** | **6*** | **87@** | | **22** |
| ¤ Based on data supplied from product data sheets<br>@ Weighed average volume solids %<br>* based on dry-to-handle time results above.<br>#Total VOC for whole system (g/m²) (calculated value): | | | | | |

For each coat:

$$(\text{VOC (g/L)}) / (\text{theoretical coverage (m}^2\text{/L) at the mentioned DFT}) = (\text{VOC for coat (g/m}^2))$$

The total VOC for the whole system equals the total amount of the contribution for each coat:

$$(\text{Total VOC for system}) = (\text{VOC for 1. coat}) + (\text{VOC for 2. coat}) + (\text{VOC for 3. coat (if any)})$$

| Table 6: Process time and VOC values (320 μm systems) | | | | | |
|---|---|---|---|---|---|
| System 1. coat/2. coat/3. coat (if any) | DFT (μm) | *Process time in paint shop (hours) | Volume solids % | VOC for coat (g/L) | #Total VOC for whole system (g/m²) |
| Hempadur zinc 17320 | 60 | | 61 | 364 | |
| Hempadur 47140 | 200 | | 70 | 291 | |
| Hempathane top coat 55210 | 60 | | 51 | 459 | |
| **Total for system** | **320** | **>22** | **65@** | | **172** |
| Permatex NCG base coat | 240 | | 81¤ | 170 | |
| Permacor 2230/VHS | 80 | | 70¤ | 248 | |
| **Total for system** | **320** | **17** | **78@** | | **79** |
| Interzinc 52 | 60 | | 59¤ | 340 | |
| Intercure 99 | 260 | | 80¤ | 205 | |
| **Total for system** | **320** | **>12** | **76@** | | **101** |
| Primer A | 200 | | 87 | 80 | |
| Top-coat 1 | 120 | | 88 | 75 | |
| **Total for system** | **320** | **7** | **87@** | | **29** |

(continued)

| Table 6: Process time and VOC values (320 μm systems) | | | | | |
|---|---|---|---|---|---|
| System 1. coat/2. coat/3. coat (if any) | DFT (μm) | *Process time in paint shop (hours) | Volume solids % | VOC for coat (g/L) | #Total VOC for whole system (g/m²) |
| Primer A | 200 | | 87 | n/a | |
| Top-coat 2 | 120 | | 85 | n/a | |
| **Total for system** | **320** | **7** | **86@** | | n/a |
| Primer A | 200 | | 87 | n/a | |
| Top-coat 3 | 120 | | 79 | n/a | |
| **Total for system** | **320** | **8** | **84@** | | n/a |

@ Weighed average volume solids %
* based on dry-to-handle time results below. "Process time in paint shop" has been calculated as dry-to-walk-on time or the recommended over-coating time plus dry-to-handle time. Regarding Hempadur 47140 a recommended over-coating time has been observed (approx. 3 h at a DFT of 200 μm)
#Total VOC for whole system (g/m²) (calculated value): determined as for Table 5.

The coating system of Primer A and Top-coat 1 supplies superior performance with respect to both process times in paint shop and VOC.

"Dry-to-handle" results at room temperature (23 °C, 50% relative humidity)

| Table 7: Dry-to-handle time | |
|---|---|
| Coating System 1. coat/2. coat | "Dry-to-handle" (h) at 320 μm |
| Hempadur zinc 17320/ Hempadur 47140/ Hempathane topcoat 55210 | >17 |
| Primer A/Top-coat 1 | 4 |
| Primer A/Top-coat 2 | 4 |
| Primer A/Top-coat 3 | 5 |
| NCG Base coat/ Permacor 2230 | 11 |
| Interzinc 52/Intercure 99 | >8 |

The systems according to the invention, reached a "dry-to-handle" state considerably faster than the commercial reference systems.

Dry-to-walk-on time at room temperature

| Table 8: Dry-to-walk-on time | | |
|---|---|---|
| Primer | DFT (μm) | Dry-to-walk-on time (h) |
| Primer A | 100 | 4 |
| Hempadur zinc 17320 | 60 | 3 |
| Interzinc 52 | 60 | 4 |
| NCG Base coat | 120 | 6 |

When compared at the dry film thicknesses specified for practical use, the primer composition according to the invention and the commercial primers Hempadur zinc 17320 and Interzinc 52 have equivalent "walk-on times", and all three seem to be faster than the commercial NCG Base Coat.

Corrosion Test - Method II

| **Table 9: Corrosion test - Method II - Corrosion category C5-M High** | |
|---|---|
| Coating system | Pass/Fail |
| Hempadur zinc 17320/ Hempadur 47140/ Hempathane topcoat 55210 | Fail |
| Primer A/Top-coat 1 | Pass |
| Primer A/Top-coat 2 | Pass |
| Primer A/Top-coat 3 | Pass |
| Permatex NCG Base Coat/Permacor 2230 VHS | Fail |
| Interzinc 52/ Intercure 99 | Pass |

The systems Hempadur zinc 17320/Hempadur 47140/Hempathane topcoat 55210 and Permatex NCG Base Coat/Permacor 2230 VHS do not pass the requirements to C5-M High due to excess rust creep, M-value (>1 mm). The three coating systems according to the invention passed the test. All coating systems exhibited excellent properties with respect to adhesion and lack of blistering.

**Claims**

1. A zinc epoxy primer composition comprising an epoxy-based binder system and 20-40 % by solids volume of the primer composition of zinc; said primer composition having a volume solids % determined according to ISO 3233 with the modification that drying is carried out at 23 °C and 50 % relative humidity for 7 days of at least 82 %.

2. The zinc epoxy primer composition according to claim 1, wherein the epoxy-based binder system comprises a curing agent selected from the group consisting of Mannich bases, aliphatic polyamines and modified aliphatic polyamines.

3. The zinc epoxy primer composition according to claim 2, wherein said curing agent is at least partly further reacted with a glycidyl ether functional reactive diluent.

4. The zinc epoxy primer composition according any one of the preceding claims, wherein the epoxy-based binder system includes epoxy and modified epoxy resins selected from bisphenol A, bisphenol F, Novolac epoxies, non-aromatic hydrogenated epoxies, cyclo aliphatic epoxies, glycidyl esters and epoxy functional acrylics or any combinations hereof.

5. The zinc epoxy primer composition according any one of the preceding claims, wherein the epoxy-based binder system comprises one or more curing agents selected from compounds or polymers comprising at least two reactive hydrogen atoms linked to nitrogen, such curing agents being selected from aliphatic amines and polyamines, polyamido amines, polyoxy alkylene amines, aminated polyalkoxy ethers, alkylene amines, aralkyl amines, aromatic amines, Mannich bases, and including epoxy adducts and derivatives thereof.

6. The zinc epoxy primer composition according any one of the preceding claims, wherein the epoxy-based binder system comprises a) one or more epoxy resins selected from bisphenol A, bisphenol F and Novolac; and b) one or more curing agents selected from Mannich Bases, polyamido amines, polyoxy alkylene amines, alkylene amines, aralkyl amines, polyamines, and adducts and derivatives thereof.

7. The zinc epoxy primer composition according to any one of the preceding claims, comprising 20-35 % by solids volume of zinc.

**8.** The zinc epoxy primer composition according to claim 7, comprising 25-30 % by solids volume of zinc.

**9.** Use of a zinc epoxy primer composition according to any one of the preceding claims in a coating system consisting of:

(i) the first layer of said zinc epoxy primer composition, said zinc epoxy primer composition being in wet form when applied to the surface of a substrate and having a volume solids % of at least 82 %; and
(ii) the second layer of a top-coat composition comprising a polyurea-based binder system, said top-coat composition being in wet form when applied to the surface of a substrate and having a volume solids % of at least 82 %;

wherein the weighted average volume solids % of the coating system is at least 84 %;
and wherein the volume solids is determined according to ISO 3233 with the modification that drying is carried out at 23 °C and 50 % relative humidity for 7 days.

**10.** Use of a zinc epoxy primer composition according to any one of the claims 1-8 in a coating system consisting of:

(i) the first layer of said zinc epoxy primer composition, said zinc epoxy primer composition being in wet form when applied to the surface of a substrate and having a volume solids % of at least 86 %; and
(ii) the second layer of a top-coat composition comprising a polyurea-based binder system, said top-coat composition being in wet form when applied to the surface of a substrate and having a volume solids % of at least 78 %;

wherein the weighted average volume solids % of the coating system is at least 82 %;
and wherein the volume solids is determined according to ISO 3233 with the modification that drying is carried out at 23 °C and 50 % relative humidity for 7 days.

**11.** The use according to any one of the claims 9 and 10, wherein the zinc epoxy primer composition comprises 20-35 % by solids volume of zinc.

**12.** The use according to claim 11, wherein the zinc epoxy primer composition comprises 25-30 % by solids volume of zinc.

**13.** The use of a zinc epoxy primer composition according to any one of the claims 1-8 in a method for the establishment of a coated structure using a coating system consisting of the zinc epoxy primer composition and a top-coat composition, said top-coat composition comprising a polyurea-based binder system, said method comprising:

(i) applying said zinc epoxy primer composition in wet form onto a predetermined part of the surface of the structure thereby forming a curable primer film on said surface,
(ii) allowing said curable primer film to at least partially cure thereby forming an epoxy primer coat,
(iii) applying the top-coat composition in wet form onto the epoxy primer coat thereby forming a curable top-coat film on said epoxy primer coat, and
(iv) allowing said curable top-coat film to cure, and if necessary allowing said epoxy primer coat to fully cure, thereby forming a cured coating system consisting of the epoxy primer coat and a polyurea top-coat;

wherein said zinc epoxy primer composition has a volume solids % of at least 82 %, said top-coat composition having a volume solids % of at least 82 %; and the weighted average volume solids % of the coating system being at least 84 %; or
wherein said zinc epoxy primer composition has a volume solids % of at least 86 %, said top-coat composition having a volume solids % of at least 78 %; and the weighted average volume solids % of the coating system being at least 82 %;
and wherein the volume solids is determined according to ISO 3233 with the modification that drying is carried out at 23 °C and 50 % relative humidity for 7 days.

**14.** The use according to claim 13, wherein the zinc epoxy primer composition comprises 20-35 % by solids volume of zinc.

**15.** The use according to claim 14, wherein the zinc epoxy primer composition comprises 25-30 % by solids volume of zinc.

**Patentansprüche**

**1.** Zink-Epoxid-Grundierzusammensetzung, umfassend ein Bindersystem auf Epoxidbasis und, auf das Feststoffvolumen der Grundierzusammensetzung bezogen, 20 bis 40 % Zink; wobei die Grundierzusammensetzung ein prozentuales Festkörpervolumen, bestimmt gemäß ISO 3233 mit der Abänderung, dass das Trocknen bei 23 °C und 50 % relativer Luftfeuchtigkeit während 7 Tage durchgeführt wird, von mindestens 82 % aufweist.

**2.** Zink-Epoxid-Grundierzusammensetzung nach Anspruch 1, wobei das Bindersystem auf Epoxidbasis einen Härter, ausgewählt aus der Gruppe, bestehend aus Mannich-Basen, aliphatischen Polyaminen und modifizierten Polyaminen, umfasst.

**3.** Zink-Epoxid-Grundierzusammensetzung nach Anspruch 2, wobei der Härter mindestens teilweise mit einem reaktiven Verdünnungsmittel mit Glycidyletherfunktion weiter zur Reaktion gebracht wird.

**4.** Zink-Epoxid-Grundierzusammensetzung nach einem der vorhergehenden Ansprüche, wobei das Bindersystem auf Epoxidbasis Epoxid- und modifizierte Epoxidharze, ausgewählt aus Bisphenol A, Bisphenol F, Novolac-Epoxiden, nichtaromatischen hydrierten Epoxiden, cycloaliphatischen Epoxiden, Glycidylestern und epoxidfunktionellen Acrylen oder beliebigen Kombinationen hiervon, beinhaltet.

**5.** Zink-Epoxid-Grundierzusammensetzung nach einem der vorhergehenden Ansprüche, wobei das Bindersystem auf Epoxidbasis einen oder mehrere Härter, ausgewählt aus Verbindungen oder Polymeren, die mindestens zwei reaktive Wasserstoffatome umfassen, die an Stickstoff gebunden sind, umfasst, wobei solche Härter aus aliphatischen Aminen und Polyaminen, Polyamidoaminen, Polyoxyalkylenaminen, aminierten Polyalkoxyethern, Alkylenaminen, Aralkylaminen, aromatischen Aminen, Mannich-Basen und einschließlich Epoxid-Addukten und Derivaten davon ausgewählt sind.

**6.** Zink-Epoxid-Grundierzusammensetzung nach einem der vorhergehenden Ansprüche, wobei das Bindersystem auf Epoxidbasis a) ein oder mehrere Epoxidharze, ausgewählt aus Bisphenol A, Bisphenol F und Novolac, umfasst; und b) einen oder mehrere Härter, ausgewählt aus Mannich-Basen, Polyamidoaminen, Polyoxyalkylenaminen, Alkylenaminen, Aralkylaminen, Polyaminen und Addukten und Derivaten davon, umfasst.

**7.** Zink-Epoxid-Grundierzusammensetzung nach einem der vorhergehenden Ansprüche, umfassend, auf das Feststoffvolumen bezogen, 20 bis 35 % Zink.

**8.** Zink-Epoxid-Grundierzusammensetzung nach Anspruch 7, umfassend, auf das Feststoffvolumen bezogen, 25 bis 30 % Zink.

**9.** Benutzung einer Zink-Epoxid-Grundierzusammensetzung nach einem der vorhergehenden Ansprüche in einem Beschichtungssystem, bestehend aus:

(i) der ersten Lage aus der Zink-Epoxid-Grundierzusammensetzung, wobei die Zink-Epoxid-Grundierzusammensetzung in feuchter Form ist, wenn sie auf die Fläche eines Substrats aufgebracht wird, und ein prozentuales Festkörpervolumen von mindestens 82 % aufweist; und
(ii) der zweiten Lage aus einer Deckschichtzusammensetzung, umfassend ein Bindersystem auf Basis von Polyharnstoff, wobei die Deckschichtzusammensetzung in feuchter Form ist, wenn sie auf die Fläche eines Substrats aufgebracht wird, und ein prozentuales Festkörpervolumen von mindestens 82 % aufweist;

wobei das gewichtete durchschnittliche prozentuale Festkörpervolumen des Beschichtungssystems mindestens 84 % beträgt;
und wobei das Festkörpervolumen gemäß ISO 3233 mit der Abänderung, dass das Trocknen bei 23 °C und 50 % relativer Luftfeuchtigkeit während 7 Tage durchgeführt wird, bestimmt wird.

**10.** Benutzung einer Zink-Epoxid-Grundierzusammensetzung nach einem von Anspruch 1 bis 8 in einem Beschichtungssystem, bestehend aus:

(i) der ersten Lage aus der Zink-Epoxid-Grundierzusammensetzung, wobei die Zink-Epoxid-Grundierzusammensetzung in feuchter Form ist, wenn sie auf die Fläche eines Substrats aufgebracht wird, und ein prozentuales Festkörpervolumen von mindestens 86 % aufweist; und
(ii) der zweiten Lage aus einer Deckschichtzusammensetzung, umfassend ein Bindersystem auf Basis von Polyharnstoff, wobei die Deckschichtzusammensetzung in feuchter Form ist, wenn sie auf die Fläche eines Substrats aufgebracht wird, und ein prozentuales Festkörpervolumen von mindestens 78 % aufweist;

wobei das gewichtete durchschnittliche prozentuale Festkörpervolumen des Beschichtungssystems mindestens 82 % beträgt;
und wobei das prozentuale Festkörpervolumen gemäß ISO 3233 mit der Abänderung, dass das Trocknen bei 23 °C und 50 % relativer Luftfeuchtigkeit während 7 Tage durchgeführt wird, bestimmt wird.

**11.** Benutzung nach einem von Anspruch 9 und 10, wobei die Zink-Epoxid-Grundierzusammensetzung, auf das Feststoffvolumen bezogen, 20 bis 35 % Zink umfasst.

**12.** Benutzung nach Anspruch 11, wobei die Zink-Epoxid-Grundierzusammensetzung, auf das Feststoffvolumen bezogen, 25 bis 30 % Zink umfasst.

**13.** Benutzung einer Zink-Epoxid-Grundierzusammensetzung nach einem von Anspruch 1 bis 8 in einem Verfahren zur Schaffung einer beschichteten Struktur unter Benutzen eines Beschichtungssystems, das aus der Zink-Epoxid-Grundierzusammensetzung und einer Deckschichtzusammensetzung besteht, wobei die Deckschichtzusammensetzung ein Bindersystem auf Basis von Polyharnstoff umfasst, wobei das Verfahren umfasst:

(i) Aufbringen der Zink-Epoxid-Grundierzusammensetzung in feuchter Form auf einen vorbestimmten Teil der Fläche der Struktur, wodurch ein härtbarer Grundierfilm auf der Fläche gebildet wird,
(ii) mindestens teilweises Aushärtenlassen des härtbaren Grundierfilms, wodurch er eine Epoxid-Grundierschicht bildet,
(iii) Aufbringen der Deckschichtzusammensetzung in feuchter Form auf die Epoxid-Grundierschicht, wodurch ein härtbarer Deckschichtfilm auf der Epoxid-Grundierschicht gebildet wird, und
(iv) Aushärtenlassen des härtbaren Deckschichtfilms und, falls erforderlich, vollständiges Aushärtenlassen der Epoxid-Grundierschicht, wodurch ein ausgehärtetes Beschichtungssystem gebildet wird, das aus der Epoxid-Grundierschicht und einer Polyharnstoff-Deckschicht besteht;

wobei die Zink-Epoxid-Grundierzusammensetzung ein prozentuales Festkörpervolumen von mindestens 82 % aufweist, die Deckschichtzusammensetzung ein prozentuales Festkörpervolumen von mindestens 82 % aufweist; und das gewichtete durchschnittliche prozentuale Festkörpervolumen des Beschichtungssystems mindestens 84 % beträgt; oder
wobei die Zink-Epoxid-Grundierzusammensetzung ein prozentuales Festkörpervolumen von mindestens 86 % aufweist, die Deckschichtzusammensetzung ein prozentuales Festkörpervolumen von mindestens 78 % aufweist; und das gewichtete durchschnittliche prozentuale Festkörpervolumen des Beschichtungssystems mindestens 82 % beträgt;
und wobei das Festkörpervolumen gemäß ISO 3233 mit der Abänderung, dass das Trocknen bei 23 °C und 50 % relativer Luftfeuchtigkeit während 7 Tage durchgeführt wird, bestimmt wird.

**14.** Benutzung nach Anspruch 13, wobei die Zink-Epoxid-Grundierzusammensetzung, auf das Feststoffvolumen bezogen, 20 bis 35 % Zink umfasst.

**15.** Benutzung nach Anspruch 14, wobei die Zink-Epoxid-Grundierzusammensetzung, auf das Feststoffvolumen bezogen, 25 bis 30 % Zink umfasst.

## Revendications

**1.** Composition d'amorce zinc époxy comprenant un système de liant à base d'époxy et entre 20 et 40 % de la composition d'amorce de zinc en volume de matières solides ; ladite composition d'amorce possédant une concentration volumique de matières solides en terme de pourcentage déterminé conformément à ISO 3233 avec la modification indiquant que le séchage est effectué à 23 °C et à une humidité relative de 50 % pendant 7 jours d'au moins 82 %.

**2.** Composition d'amorce zinc époxy selon la revendication 1, dans laquelle le système de liant à base d'époxy comprend un agent durcisseur choisi parmi le groupe constitué des bases de Mannich, des polyamines aliphatiques et des polyamines aliphatiques modifiées.

**3.** Composition d'amorce zinc époxy selon la revendication 2, dans laquelle ledit agent durcisseur est au moins partiellement en outre mis en réaction avec un diluant réactif fonctionnel à base d'éther glycidylique.

4. Composition d'amorce zinc époxy selon l'une quelconque des revendications précédentes, dans laquelle le système d'amorce à base d'époxy inclut des résines époxy et des résines époxy modifiées choisies parmi le bisphénol A, le bisphénol F, les époxy Novolac, les époxy hydrogénés non aromatiques, les époxy cycloaliphatiques, les esters glycidyliques et les acryliques à fonction époxy ou toutes combinaisons de ceux-ci.

5. Composition d'amorce zinc époxy selon l'une quelconque des revendications précédentes, dans laquelle le système de liant à base d'époxy comprend un ou plusieurs agents durcisseurs choisis parmi des composés ou des polymères comprenant au moins deux atomes d'hydrogène réactifs liés à un azote, de tels agents durcisseurs étant choisis parmi des amines et polyamines aliphatiques, des polyamido amines, des polyoxy alkylène amines, des polyalcoxy éthers aminés, des alkylène amines, des aralkyl amines, des amines aromatiques, des bases de Mannich, et y compris des produits d'addition et dérivés époxy de ceux-ci.

6. Composition d'amorce zinc époxy selon l'une quelconque des revendications précédentes, dans laquelle le système de liant à base d'époxy comprend a) une ou plusieurs résines à base d'époxy choisies parmi le bisphénol A, le bisphénol F et le Novolac ; et b) un ou plusieurs agents durcisseurs choisis parmi des bases de Mannich, des polyamido amines, des polyoxy alkylène amines, des alkylène amines, des aralkyl amines, des polyamines, et des produits d'addition et dérivés de ceux-ci.

7. Composition d'amorce zinc époxy selon l'une quelconque des revendications précédentes, comprenant entre 20 et 35 % de zinc en volume de matières solides.

8. Composition d'amorce zinc époxy selon la revendication 7, comprenant entre 25 et 30 % de zinc en volume de matières solides.

9. Utilisation d'une composition d'amorce zinc époxy selon l'une quelconque des revendications précédentes dans un système de revêtement constitué de :

(i) la première couche de ladite composition d'amorce zinc époxy, ladite composition d'amorce zinc époxy étant sous forme humide lorsqu'elle est appliquée sur la surface d'un substrat et possédant une concentration volumique en terme de pourcentage de matières solides d'au moins 82 % ; et
(ii)la seconde couche d'une composition de revêtement supérieur comprenant un système de liant à base de polyurée, ladite composition de revêtement supérieur étant sous forme humide lorsqu'elle est appliquée sur la surface d'un substrat et possédant une concentration volumique en terme de pourcentage de matières solides d'au moins 82 % ;

dans laquelle la moyenne pondérée des concentrations volumiques en terme de pourcentage de matières solides du système de revêtement et d'au moins 84 % ;
et dans laquelle le volume de matières solides est déterminé conformément à ISO 3233 avec la modification indiquant que le séchage est effectué à 23 °C et à une humidité relative de 50 % pendant 7 jours.

10. Utilisation d'une composition d'amorce zinc époxy selon l'une quelconque des revendications 1 à 8 dans un système de revêtement constitué de :

(i)la première couche d'une composition d'amorce zinc époxy, ladite composition d'amorce zinc époxy étant sous forme humide lorsqu'elle est appliquée sur la surface d'un substrat et possédant une concentration volumique en terme de pourcentage de matières solides d'au moins 86 % ; et
(ii)la seconde couche d'une composition de revêtement supérieur comprenant un système de liant à base de polyurée, ladite composition de revêtement supérieur étant sous forme humide lorsqu'elle est appliquée sur la surface d'un substrat et possédant une concentration volumique en terme de pourcentage de matières solides d'au moins 78 % ;

dans laquelle la moyenne pondérée des concentrations volumiques en terme de pourcentage de matières solides du système de revêtement et d'au moins 82 % ;
et dans laquelle le volume de matières solides est déterminé conformément à ISO 3233 avec la modification indiquant que le séchage est effectué à 23 °C et à une humidité relative de 50 % pendant 7 jours.

11. Utilisation selon l'une quelconque des revendications 9 et 10, dans laquelle la composition d'amorce zinc époxy comprend entre 25 et 35 % de zinc en volume de matières solides.

**12.** Utilisation selon la revendication 11, dans laquelle la composition d'amorce zinc époxy comprend entre 25 et 30 % de zinc en volume de matières solides.

**13.** Utilisation d'une composition d'amorce zinc époxy selon l'une quelconque des revendications 1 à 8 dans un procédé pour l'établissement d'une structure de revêtement en utilisant un système de revêtement constitué de la composition d'amorce zinc époxy et d'une composition de revêtement supérieur, ladite composition de revêtement supérieur comprenant un système de liant à base de polyurée, ledit procédé consistant à :

(i) appliquer ladite composition d'amorce zinc époxy sous forme humide sur une partie prédéterminée de la surface de la structure formant ainsi un film d'amorce durcissable sur ladite surface,
(ii) permettre audit film d'amorce durcissable d'au moins partiellement durcir formant ainsi un revêtement d'amorce époxy,
(iii) appliquer la composition de revêtement supérieur sous forme humide sur le revêtement d'amorce époxy formant ainsi un film de revêtement supérieur durcissable sur ledit revêtement d'amorce époxy, et
(iv) permettre audit film de revêtement supérieur durcissable de durcir, et si nécessaire permettre audit revêtement d'amorce époxy de durcir complètement, formant ainsi un système de revêtement durci constitué du revêtement d'amorce époxy et d'un revêtement supérieur à base de polyurée ;

dans laquelle ladite composition d'amorce zinc époxy possède une concentration volumique en terme de pourcentage de matières solides d'au moins 82 %, ladite composition de revêtement supérieur possédant une concentration volumique en terme de pourcentage de matières solides d'au moins 82 % ; et la moyenne pondérée des concentrations volumiques en terme de pourcentage de matières solides du système de revêtement étant d'au moins 84 % ; ou
dans laquelle ladite composition d'amorce zinc époxy possède une concentration volumique en terme de pourcentage de matières solides d'au moins 86 %, ladite composition de revêtement supérieur possédant une concentration volumique en terme de pourcentage de matières solides d'au moins 78 % ; et la moyenne pondérée du pourcentage volumique de matières solides du système de revêtement étant d'au moins 82 % ;
et dans laquelle le volume de matières solides est déterminé conformément à ISO 3233 avec la modification indiquant que le séchage est effectué à 23 °C et à une humidité relative de 50 % pendant 7 jours.

**14.** Utilisation selon la revendication 13, dans laquelle la composition d'amorce zinc époxy comprend entre 20 et 35 % de zinc en volume de matières solides.

**15.** Utilisation selon la revendication 14, dans laquelle la composition d'amorce zinc époxy comprend entre 25 et 30 % de zinc en volume de matières solides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006119770 A
- US 5987727 A
- EP 257513 A
- EP 1788048 A
- WO 2007054304 A
- WO 2008125610 A
- US 5126170 A